# EUROPÄISCHE PATENTSCHRIFT

(11) **EP 2 792 463 B1**
(45) Veröffentlichungstag und Bekanntmachung des Hinweises auf die Patenterteilung: **30.08.2017**
(21) Anmeldenummer: 14163501.1
(22) Anmeldetag: 04.04.2014
(51) Int. Cl.: B29C 37/00, B05D 7/02, B05D 5/08, B29D 30/00

(54) **Verfahren zur Herstellung eines Fahrzeugreifens und Fahrzeugreifen**
Method for producing a tyre for a vehicle and tyre for a vehicle
Procédé de fabrication d'un pneu de véhicule et pneu de véhicule

(30) Priorität: 18.04.2013 DE 102013103946
(43) Veröffentlichungstag der Anmeldung: 22.10.2014
(73) Patentinhaber: Continental Reifen Deutschland GmbH, 30165 Hannover (DE)
(72) Erfinder: Kendziorra, Norbert, 30827 Garbsen (DE); Schmeitz, Martin, 34497 Korbach (DE); Butterweck, Frank, 34513 Waldeck Sachsenhausen (DE)
(74) Vertreter: Finger, Karsten

(56) Entgegenhaltungen:
- JP-A- H0 747 552
- JP-A- 2012 219 105
- US-A- 4 285 897
- US-A- 4 857 397
- US-B1- 6 720 033

## Beschreibung

Die Erfindung betrifft ein Verfahren zur Herstellung eines Fahrzeugreifens und einen Fahrzeugreifen.

Bei der Herstellung von Fahrzeugreifen ist es bekannt, dass die einzelnen Bauteile des Fahrzeugreifens auf unterschiedlichen Kautschukmischungen basieren. Die einzelnen Kautschukmischungen werden separat voneinander gemischt und durch Extrusion und anschließendes Zurechtschneiden werden die unterschiedlichen unvulkanisierten Bauteile geformt. Jedes unvulkanisierte Bauteil wird an die entsprechende Stelle im sogenannten Reifenrohling platziert und dieser anschließend in einer Heizform vulkanisiert, die dem fertigen Fahrzeugreifen seine äußere Gestalt inkl. Laufstreifenprofil und Seitenwandbeschriftung gibt.

Eine Herausforderung bei der Herstellung von Fahrzeugreifen ist die Klebrigkeit der Reifenbauteile. Einerseits ist eine ausreichende Klebrigkeit im inneren des Fahrzeugreifens vorteilhaft für den Zusammenhalt der Bauteile vor der Vulkanisation, wodurch Lufteinschlüsse vermieden werden. Die ausreichende Klebrigkeit wird dabei üblicherweise über die Rezeptur der Kautschukmischung erzielt. Dabei müssen auch die äußeren Bauteile, wie Seitenwand und Laufstreifen, eine ausreichende Klebrigkeit für die Haftung an die inneren Bauteile aufweisen. Bei inneren Bauteilen ist der Zusatz von Additiven, wie Klebharzen, bekannt, um die Klebrigkeit im unvulkanisierten Zustand zu erhöhen.
Auch ohne zusätzliche Additive, wie Klebharze, kann jedoch die Kautschukmischung einer Seitenwand oder eines Laufstreifens durch die enthaltenen Polymere und Weichmacher eine sehr hohe Klebrigkeit aufweisen.
Eine hohe Klebrigkeit der äußeren Bauteile von Fahrzeugreifen, also insbesondere der Seitenwand und des Laufstreifens, ist jedoch andererseits nachteilig, da es während der Vulkanisation in der Heizform zu Anhaftungen dieser Bauteile an die Form und in der Folge zu Materialabrissen beim Öffnen der Heizform nach der Vulkanisation kommen kann.

Die Heizform muss dann in einem zusätzlichen Prozessschritt gereinigt werden, was zeit- und kostenaufwändig ist oder das Heizen weiterer Reifen in der gleichen, dann beschmutzten Heizform, hätte weitere Verklebungen und Materialabrisse zur Folge. Ferner kann die Verklebung eines äußeren Bauteils von Fahrzeugreifen an das innere der Heizform so stark sein, dass die Form nur unter hohem Energieaufwand zu öffnen ist.

Im Stand der Technik werden zur Vermeidung dieser Probleme u.a. Anti-Haft-Beschichtungen auf den Formflächen der Heizform aufgebracht, was allerdings sehr kostenaufwändig ist.

Des Weiteren gibt es den Ansatz, die Adhäsion der Formflächen der Heizformen an die Kautschukmischungen statt mit einer dauerhaften Anti-Haft-Beschichtung durch das Aufsprühen einer Anti-Haft-Lösung herabzusetzen. Allerdings verbleibt hier bei jedem Heizvorgang ein Rest dieser Lösung an dem jeweilig geheizten Reifen, sodass die Lösung regelmäßig wieder aufgesprüht werden muss. Zudem hat sich herausgestellt, dass teilweise die Fahreigenschaften der Reifen durch den dünnen Film der Anti-Haft-Lösung nachteilig beeinträchtigt sind. Dies gilt insbesondere für den Griff auf der Fahrbahn beim Bremsen und bei der Kurvenfahrt.

Die US 4285897 A offenbart ein Gemisch, welches unter anderem Wasser und ein Elastomer Latex enthält, zum Auftragen auf einen Reifenrohling vor dessen Vulkanisation. Das Gemisch enthält ferner ein Tensid und ein Schmiermittel (particulate lubricant), wobei das Gemisch im Wesentlichen für eine ausreichende Entlüftung bei der Vulkanisation des Reifens sorgen soll und zudem auf gesundheitsschädliche Lösungsmittel verzichtet werden soll.

Die US 4857397 A offenbart ein wässriges Gemisch, welches unter anderem Polybutadien und/oder Styrol-Butadien-Copolymer enthält, und ohne ein Wachs für eine ausreichende Trennung zwischen Reifenrohling bzw. vulkanisiertem Reifen und Heizform sorgen soll. Die Aufgabe der vorliegenden Erfindung besteht nun darin, ein Verfahren zur Herstellung eines Fahrzeugreifens bereitzustellen, bei dem die Klebrigkeit der Reifenbauteile, insbesondere der äußeren Reifenbauteile, wie der Seitenwand und/oder des Laufstreifens, vermieden wird oder derart herabgesetzt wird, dass eine Anhaftung des Reifenrohlings an die Heizform nicht auftritt. Gleichzeitig sollen die Eigenschaften des Fahrzeugreifens hinsichtlich der üblichen Anforderungen, wie z.B. Rollwiderstandsverhalten, Nass- und Trockenbremsverhalten, ausreichender Griff auf Schnee und Eis, Abriebverhalten und Reißwiderstand, nicht nachteilig beeinträchtigt werden.

Gelöst wird diese Aufgabe erfindungsgemäß dadurch, dass das Verfahren wenigstens folgende Verfahrensschritte enthält:
- Extrusion wenigstens einer unvulkanisierten Kautschukmischung und anschließendes Ablängen zur Formung wenigstens eines unvulkanisierten Reifenbauteils und
- Auftragen einer Schicht aus einer wässrigen Polymer-Emulsion, welche wenigstens ein Polymer enthält, auf das extrudierte unvulkanisierte Reifenbauteil nach der Extrusion zur Bildung eines beschichteten unvulkanisierten Reifenbauteils und
- Entfernung des Wasseranteils der wässrigen Polymer-Emulsion durch Verdampfen von dem beschichteten Reifenbauteil und
- Aufbringen des beschichteten Reifenbauteils auf eine unvulkanisierte Karkasse zur Herstellung eines unvulkanisierten Reifenrohlings und
- Vulkanisation des Reifenrohlings,
wobei die aufgetragene wässrige Emulsion Vulkanisationsagenzien enthält.

Enthält das erfindungsgemäße Verfahren wenigstens die oben genannten Verfahrensschritte, so wird eine Anhaftung des Fahrzeugreifens an die Heizform vermieden. Gleichzeitig beeinträchtigt die Schicht aus einem Polymer nicht die üblichen Reifeneigenschaften, wie Rollwiderstandsverhalten, Nass- und Trockenbremsverhalten, ausreichender Griff auf Schnee und Eis, Abriebverhalten und Reißwiderstand.

Die Aufgabe wird ebenfalls durch das folgende erfindungsgemäße Verfahren gelöst:
a) Extrusion wenigstens einer unvulkanisierten Kautschukmischung
b) Auftragen einer Schicht aus einer wässrigen Polymer-Emulsion, welche wenigstens ein Polymer enthält, auf wenigstens eine Oberfläche der unvulkanisierten Kautschukmischung
c) Entfernung des Wasseranteils der wässrigen Polymer-Emulsion durch Verdampfen
d) Ablängen der extrudierten unvulkanisierten Kautschukmischung zur Formung eines unvulkanisierten Reifenbauteils
e) Aufbringen des unvulkanisierten Reifenbauteils auf eine unvulkanisierte Karkasse zur Herstellung eines unvulkanisierten Reifenrohlings und
f) Vulkanisation des Reifenrohlings,
wobei die aufgetragene wässrige Emulsion Vulkanisationsagenzien enthält.

Enthält das erfindungsgemäße Verfahren wenigstens die oben genannten Verfahrensschritte a) bis f), so wird eine Anhaftung des Fahrzeugreifens an die Heizform vermieden. Gleichzeitig beeinträchtigt die Schicht aus einem Polymer nicht die üblichen Reifeneigenschaften, wie Rollwiderstandsverhalten, Nass- und Trockenbremsverhalten, ausreichender Griff auf Schnee und Eis, Abriebverhalten und Reißwiderstand.

Hierbei entspricht die zeitliche Reihenfolge der Verfahrensschritte nicht zwangsweise der Reihenfolge der Aufzählung.

Gemäß einer bevorzugten Ausführungsform der Erfindung erfolgt der Verfahrensschritt d) zeitlich nach dem Verfahrensschritt b). Somit wird zunächst die Polymer-Emulsion auf die extrudierte unvulkanisierte Kautschukmischung aufgetragen und dann erfolgt das Ablängen. Dies hat den Vorteil, dass das Auftragen der Polymer-Emulsion unmittelbar auf die heiße extrudierte Kautschukmischung erfolgen kann, wodurch wie unten beschrieben, das Wasser der Emulsion gut bzw. schnell verdampfen kann.

Gemäß einer weiteren bevorzugten Ausführungsform der Erfindung erfolgt der Verfahrensschritt b) zeitlich nach dem Verfahrensschritt d). Hierbei wird die extrudierte unvulkanisierte Kautschukmischung zunächst abgelängt und anschließend mit der Polymer-Emulsion beschichtet.

Gemäß einer weiteren bevorzugten Ausführungsform der Erfindung erfolgt der Verfahrensschritt b) zeitlich nach dem Verfahrensschritt e). Gemäß dieser Ausführungsform des erfindungsgemäßen Verfahrens erfolgt zunächst das Auflegen des unvulkanisierten Bauteils auf die Karkasse des Reifenrohlings und anschließend die Beschichtung mit der Polymer-Emulsion.

Unter dem Ausdruck "wässrige Polymer-Emulsion" wird im Rahmen der vorliegenden Erfindung eine Emulsion aus Wasser und wenigstens einem Polymer verstanden, d.h., dass die wässrige Polymer-Emulsion wenigstens ein Polymer und Wasser enthält. Zusätzlich können weitere Substanzen in der Emulsion enthalten sein, die z.B. bei der Gewinnung des Polymers als Begleitsubstanzen mitgeführt werden.

Erfindungsgemäß verdampft der Wasseranteil der wässrigen Polymer-Emulsion, sodass nach dem Verdampfen eine Polymer-Schicht auf dem unvulkanisierten Bauteil bzw. der unvulkanisierten Kautschukmischung verbleibt.

Unter dem Begriff "Ablängen" ist im Rahmen der vorliegenden Anmeldung das Zurechtschneiden der extrudierten Kautschukmischung zu verstehen. Hierdurch wird das extrudierte unvulkanisierte Bauteil geformt, welches in späteren Verfahrensschritten in der durch das Ablängen erreichten Länge auf die unvulkanisierte Karkasse aufgebracht wird.

Unter "extrudierte Kautschukmischung" oder "extrudierte unvulkanisierte Kautschukmischung" oder "unvulkanisierte Kautschukmischung" wird im Rahmen der vorliegenden Erfindung je nach Reihenfolge der Verfahrensschritte sowohl eine beschichtete als auch unbeschichtete Kautschukmischung verstanden.

Unter "extrudiertes Bauteil" oder "unvulkanisiertes Bauteil" oder "extrudiertes unvulkanisiertes Bauteil" wird im Rahmen der vorliegenden Erfindung je nach Reihenfolge der Verfahrensschritte sowohl ein beschichtetes als auch ein unbeschichtetes Bauteil verstanden. Das Gleiche gilt entsprechend für den Begriff "Reifenbauteil" statt "Bauteil".

Erfindungswesentlich ist es, dass die Kautschukmischung beim Auftragen der Polymer-Emulsion extrudiert ist. Das Auftragen der Polymer-Emulsion auf wenigstens eine Oberfläche kann vor oder nach dem Ablängen erfolgen.

Bevorzugt beträgt die Dicke der Schicht aus einer wässrigen Polymer-Emulsion senkrecht zur Extrusionsrichtung des extrudierten Bauteils bzw. der extrudierten Kautschukmischung vor dem Verdampfen des Wassers 10 bis 200 µm (Mikrometer), besonders bevorzugt 10 bis 100 µm.

Weiterhin ist es bevorzugt, wenn die Dicke der Polymer-Schicht senkrecht zur Extrusionsrichtung des extrudierten Bauteils bzw. der extrudierten Kautschukmischung nach dem Verdampfen des Wassers 5 bis 100 µm (Mikrometer), besonders bevorzugt 5 bis 50 µm beträgt.

Bevorzugt enthält die wässrige Polymer-Emulsion 40 bis 80 Vol.-%, besonders bevorzugt 40 bis 60 Vol.-%, ganz besonders bevorzugt 45 bis 55 Vol.-% und wiederum ganz besonders bevorzugt 50 Vol.-% Wasser.
Unter Vol.-% ist im Rahmen der vorliegenden Anmeldung Volumen-Prozent, also das relative Volumen bezogen auf das Gesamtvolumen, zu verstehen.
Im Rahmen der vorliegenden Erfindung verdampft also das in der wässrigen Polymer-Emulsion enthaltene Wasser vollständig oder nahezu vollständig, wobei der in der Polymer-Schicht verbleibende Anteil an Wasser 0 bis 0,1 Gew.-%, bevorzugt 0 Gew.-% beträgt. Die Verringerung des Wassergehaltes wird über den Gewichtsverlust bei und nach dem Trocknen, also bei und nach dem Verdampfen des Wassers, bestimmt.

Die verbleibende Schicht nach dem Verdampfen des Wassers ist mit 5 bis 100 µm, besonders bevorzugt 5 bis 50 µm, dick genug, um die beschriebenen Anhaftungen an die Heizform zu vermeiden und dünn genug, um die genannten Reifeneigenschaften nicht negativ zu beeinträchtigen.

Gemäß einer vorteilhaften Weiterbildung der Erfindung ist das in der wässrigen Polymer-Emulsion enthaltene Polymer ein Latex aus Polyisopren, bevorzugt natürliches Polyisopren (Natur-Kautschuk), und/oder ein Latex aus einem Synthesekautschuk wie Styrol-Butadien-Copolymeren und/oder Nitril-Butadien-Copolymeren und/oder Acrylnitrilen und/oder Copolymer von Acrylnitril und anderen Monomeren, wie Butadien, und/oder Polyurethan und/oder Ethylen-Propylen-Copolymeren und/oder Ethylen-Propylen-Dien-Terpolymeren und/oder weiteren Ethylen-Propylen-Elastomeren und/oder Polychloropren, wie Chloropren-Kautschuk, und/oder ein Latex aus einem weiteren Copolymer, dem als Monomer wenigstens Butadien zu Grunde liegt.
Diese und/oder- Aufzählung soll Gemische der genannten Latizes mit umfassen. Es kann sich daher z.B. auch um ein Gemisch aus Latex aus natürlichem Polyisopren und einem Latex aus Styrol-Butadien-Copolymeren handeln.
Die Polymere können auch modifiziert sein und/oder funktionelle Gruppen tragen, wobei insbesondere carboxylierte und/oder epoxydierte Polymere denkbar sind.
Bei dem weiteren Copolymer, dem als Monomer wenigstens Butadien zu Grunde liegt, kann es sich z.B. um Acrylnitril-Butadien-Copolymer handeln.
Besonders bevorzugt ist das in der wässrigen Polymer-Emulsion enthaltene Polymer ein Latex aus natürlichem Polyisopren und/oder ein Latex aus Styrol-Butadien-Copolymeren und/oder ein Latex aus Nitril-Butadien-Copolymeren und/oder ein Latex aus Polychloropren, wie Chloropren-Kautschuk, und/oder ein Latex aus Acrylnitril-Butadien-Copolymer.
Ganz besonders bevorzugt ist das in der wässrigen Polymer-Emulsion enthaltene Polymer ein Latex aus natürlichem Polyisopren und/oder ein Latex aus Styrol-Butadien-Copolymeren und/oder ein Latex aus Nitril-Butadien-Copolymeren.
Wiederum ganz besonders bevorzugt ist das in der wässrigen Polymer-Emulsion enthaltene Polymer ein Latex aus natürlichem Polyisopren und/oder ein Latex aus Styrol-Butadien-Copolymeren.

Die bei dem Verfahren aufgetragene Schicht kann zusätzlich zu der Herabsetzung der Klebrigkeit weitere Funktionen haben, wie beispielsweise Glanz und/oder Verbesserung der Alterungsbeständigkeit und/oder Ozonschutz insbesondere durch Verhinderung des Ausblühens von Ozonschutzwachs.

In einer bevorzugten Ausführungsform der Erfindung handelt es sich bei dem Bauteil um einen unvulkanisierten Laufstreifen. Besonders die Anhaftung des Fahrzeugreifens über den Laufstreifen an die Heizform durch aus dem Laufstreifen austretende Weichmacher vor und während der Vulkanisation kann dadurch vermieden werden.

Bevorzugt wird daher die wässrige Emulsion nur auf die radial äußere später mit der Heizform und im Fahrbetrieb des Fahrzeugreifens mit der Fahrbahn in Berührung kommende Seite des unvulkanisierten Laufstreifens aufgetragen.
Somit ist die Klebrigkeit des unvulkanisierten Bauteils "Laufstreifen" auf seiner radial inneren Oberfläche an die inneren Bauteile nicht beeinträchtigt, während die aufgetragene Polymer-Schicht nach dem Verdampfen des Wassers auf der radial äußeren Oberfläche die Anhaftung an die Heizform verhindert. Weiterhin wird die Klebrigkeit der Seitenbereiche des unvulkanisierten Laufstreifens nicht herabgesetzt, wenn die wässrige Emulsion nur auf die radial äußere später mit der Heizform und im Fahrbetrieb mit der Fahrbahn in Berührung kommende Oberfläche des Laufstreifens aufgetragen wird. Hierdurch ist eine ausreichende Haftung der seitlichen Bereiche des unvulkanisierten Laufstreifens an die üblicherweise damit überlappenden Bereiche der unvulkanisierten Seitenwand und an die anderen ggf. mit dem Laufstreifen überlappenden Reifenbauteile gewährleistet.

In einer weiteren bevorzugten Ausführungsform der Erfindung handelt es sich bei dem Bauteil um eine unvulkanisierte Seitenwand. Besonders die Anhaftung des Fahrzeugreifens über die Seitenwand an die Heizform durch aus der Seitenwand austretende Weichmacher vor und während der Vulkanisation kann dadurch vermieden werden. Insbesondere durch den Einsatz von Chloropren-Kautschuk-Latex oder EPDM-Suspensionen, wie beispielsweise in der US 6111007 A offenbart, kann das Alterungsverhalten und/oder das Ausblühverhalten von Chemikalien wie z.B. Alterungsschutzmitteln und/oder Ozonschutzwachsen positiv beeinflusst werden, sodass die Seitenwand langsamer altert und/oder Chemikalien in geringerem Maße oder bevorzugt gar nicht mehr ausblühen.

Bevorzugt wird die wässrige Polymer-Emulsion, welche wenigstens ein Polymer enthält, nur auf die Oberflächen des extrudierten Bauteils Seitenwand aufgetragen, die später mit der Heizform in Berührung kommen. Somit ist die ausreichende Klebrigkeit zur Haftung an die übrigen Reifenbauteile, wie Laufstreifen und innere Bauteile, gewährleistet.

In einer bevorzugten Ausführungsform der Erfindung handelt es sich bei dem Fahrzeugreifen um einen Fahrzeugluftreifen.

Besonders bevorzugt ist es aus verfahrensökonomischen Gründen, wenn das Auftragen einer Schicht aus einer wässrigen Polymer-Emulsion auf das extrudierte unvulkanisierte Bauteil wie oben beschrieben unmittelbar nach der Extrusion erfolgt, während das extrudierte Bauteil eine Temperatur von 40 bis 180 °C aufweist. Ist die Temperatur kleiner als 40 °C, so erfolgt das Verdampfen des Wassers so langsam, dass das Verfahren zur Herstellung des Fahrzeugreifens nicht wirtschaftlich sinnvoll ist.
Ganz besonders bevorzugt ist es, wenn das extrudierte Bauteil beim Auftragen der wässrigen Emulsion eine Temperatur von 100 bis 120 °C aufweist. Bei derartigen Temperaturen verdampft das Wasser innerhalb von wenigen Sekunden, wie z.B. bei Umgebungstemperaturen im Raumtemperaturbereich von 20 bis 22 °C innerhalb von 1 bis 8 Sekunden, und es findet keine unerwünschte Vorvernetzung innerhalb der Kautschukmischung des jeweiligen Reifenbauteils statt und die Temperatur ist hoch genug, sodass das Wasser in kurzer Zeit verdampft.

Es ist im Rahmen der vorliegenden Erfindung jedoch auch denkbar, dass die wässrige Emulsion auf ein kaltes Bauteil aufgetragen wird. Somit ist es denkbar, dass gelagerte extrudierte Reifenbauteile je nach Umgebungstemperatur z.B. eine Temperatur von 10 bis 40 °C aufweisen und vor dem Auflegen auf die unvulkanisierte Karkasse mit der beschriebenen Schicht der wässrigen Emulsion beschichtet werden. Hierbei wird das Bauteil erst auf die unvulkanisierte Karkasse aufgelegt, wenn das Wasser verdampft ist, wobei 0 bis 0,1 Gew.-% Wasser in der Polymer-Schicht verbleiben.

In einer vorteilhaften Ausführungsform der Erfindung erfolgt das Auftragen der wässrigen Polymer-Emulsion durch Aufsprühen mittels hinter dem Extruder angebrachten Düsen. Hierzu ist eine entsprechende und geeignete Düseneinheit dem Extruder nachgeschaltet. Hierbei kann das Ablängen der extrudierten Kautschukmischung vor oder nach dem Auftragen der Polymer-Emulsion erfolgen. Gemäß einer bevorzugten Weiterbildung erfolgt das Ablängen nach dem Auftragen.

Weiterhin kann wie oben gemäß einer bevorzugten Ausführungsform beschrieben das Auftragen der Polymer-Emulsion auch nach dem Auflegen des Bauteils auf die Karkasse des Reifenrohlings erfolgen.

Erfindungsgemäß enthält die aufgetragene wässrige Emulsion Vulkanisationsagenzien, wie Schwefel und/oder Schwefelspender und/oder Beschleuniger, die z.B. als peroxidische Vernetzer und/ oder Beschleuniger bei der Schwefelvernetzung reagieren können, und/oder ggf. Vulkanisationsverzögerer, wobei alle dem Fachmann bekannten Vulkanisationsagenzien insbesondere der genannten Substanzklassen denkbar sind.
Das Vorhandensein von wenigstens einem Vulkanisationsagens in der aufgetragenen Polymer-Schicht hat unter anderem den Vorteil, dass die Polymer-Schicht, die nach dem Verdampfen des Wassers eine Schichtdicke von 5 bis 100 µm, besonders bevorzugt, 5 bis 50 µm aufweist, beim Vulkanisieren des Fahrzeugreifens mit dem jeweiligen Bauteil vernetzt wird.
Gemäß einer vorteilhaften Weiterbildung der Erfindung wird das Polymer der aufgetragenen Schicht in einem Verfahrensschritt vernetzt. Hierbei können der Emulsion zudem bekannte Zuschlagstoffe zugesetzt werden, wie Alterungsschutzmittel und/oder Füllstoff(e).

Als Vulkanisationsagenzien kann beispielsweise ein Vernetzungssystem wie in der EP 0514560 A1 offenbart, verwendet werden, welches Polysulfide und Beschleuniger und Zinkaminkomplexe sowie geeignete Stabilisatoren umfasst. Polysulfide wirken insbesondere als Schwefelspender. Um die Zinkkomplexe im Latex zumindest für die Vernetzung zu erzielen, werden wasserlösliche Zinksalze als Ausgangssubstanzen verwendet, wie bspw. Zink(II)chlorid ZnCl₂ und/oder Zink(II)nitrathexahydrat Zn(NO₃)2*6H₂O, bevorzugt in Kombination mit Ammoniak NH₃. Als Beschleuniger können alle dem Fachmann bekannten, insbesondere wasserlösliche, verwendet werden, wie z.B. Thioharnstoffe und/oder Alkali-Dithiocarbamate und/oder Mercaptobenzothiazolate und/oder Xanthogenate.
Weiterhin können Thiuram-Verbindungen, wie Tetramethylthiuramdisulfid (TMTD) und/oder Tetraethylthiuramdisulfid (TETD) und/oder Carbamat-Beschleuniger und/oder Sulfenamidbeschleuniger und/oder Guanidin-Beschleuniger, wie Diphenylguanidin (DPG) eingesetzt werden. Insbesondere können auch wasserunlösliche Zinkverbindungen wie Zinkdibutyldithiocarbamat (ZDBC) und/oder Zinkdiethyldithiocarbamat (ZDEC) und/oder Zinkmercaptobenzothiazol (ZMBT) eingesetzt werden.

Beispielrezeptur für Schwefelvernetzung: 100 phr NR-Latex (NR = natürliches Polyisopren); 0,5 phr Zinkoxid-Dispersion; 1,25 phr Schwefel-Dispersion; 0,5 phr ZDEC; 0,5 phr ZMBT sowie 1 phr DPG.
Beispielrezeptur für peroxidische Vernetzung: 100 phr Carboxyliertes Acrylnitril-Butadien-Copolymer; 2 phr Zinkoxid; 2 phr phenolische Antioxidantien; 0,5 phr Titandioxid TiO₂; 1 phr Kaliumhydroxid sowie Wasser je nach einzustellender Viskosität.

Eine weitere Aufgabe der vorliegenden Erfindung besteht darin die Anhaftung der extrudierten Bauteile, insbesondere des Laufstreifens und/oder der Seitenwand, während der Herstellung von Fahrzeugreifen an die Heizform zu vermeiden.
Gelöst wird diese Aufgabe durch die Verwendung wenigstens einer wässrigen Emulsion eines Latex aus Polyisopren, bevorzugt natürliches Polyisopren (Natur-Kautschuk), und/oder eines Latex aus einem Synthesekautschuk wie Styrol-Butadien-Copolymeren und/oder Nitril-Butadien-Copolymeren und/oder Acrylnitrilen und/oder Copolymer von Acrylnitril und anderen Monomeren wie Butadien und/oder Polyurethan und/oder Ethylen-Propylen-Copolymere und/oder Ethylen-Propylen-Dien-Terpolymeren und/oder weiteren Ethylen-Propylen-Elastomeren und/oder Polychloropren, wie Chloropren-Kautschuk, und/oder eines Latex aus einem weiteren Copolymer, dem als Monomer wenigstens Butadien zu Grunde liegt, zur Beschichtung von extrudierten Bauteilen von Fahrzeugreifen, wobei die wässrige Emulsion Vulkanisationsagenzien enthält. Für die möglichen Latizes gelten ebenfalls die oben bei der Beschreibung des erfindungsgemäßen Verfahrens genannten bevorzugten Ausführungsformen. Auch hierbei sind Gemische von Latizes der genannten Polymere sowie modifizierte und/oder funktionalisierte Polymere denkbar.

Besonders bevorzugt wird die beschriebene wässrige Emulsion zur Beschichtung der Oberflächen von extrudierten Bauteilen verwendet, die bei der Vulkanisation mit der Heizform in Berührung kommen. Es wird weiterhin ein Fahrzeugreifen beschrieben, der keine oder nur sehr geringe Anhaftungen während seiner Vulkanisation an die Heizform aufweist. Dieser Fahrzeugreifen zeichnet sich dadurch aus, dass der radial äußere Teil des Laufstreifens und/oder der Seitenwand des Fahrzeugreifens eine 5 bis 100 µm, besonders bevorzugt 5 bis 50 µm, dicke Schicht aus einem Latex aus Polyisopren, bevorzugt natürliches Polyisopren (Natur-Kautschuk), und/oder ein Latex aus einem Synthesekautschuk wie Styrol-Butadien-Copolymeren und/oder Nitril-Butadien-Copolymeren und/oder Acrylnitrilen und/oder Copolymer von Acrylnitril und anderen Monomeren wie Butadien und/oder Polyurethan und/oder Ethylen-Propylen-Copolymeren und/oder Ethylen-Propylen-Dien-Terpolymeren und/oder weiterne Ethylen-Propylen-Elastomeren und/oder Polychloropren, wie Chloropren-Kautschuk, und/oder ein Latex aus einem weiteren Copolymer, dem als Monomer wenigstens Butadien zu Grunde liegt, aufweist. Für die möglichen Latizes gelten ebenfalls die oben bei der Beschreibung des erfindungsgemäßen Verfahrens genannten bevorzugten Ausführungsformen.
Diese Schicht verhindert während der Vulkanisation des Fahrzeugreifens in der Heizform eine Anhaftung der radial äußeren Oberflächen der Bauteile Laufstreifen und/oder Seitenwand an die Heizform.

## Patentansprüche

1. Verfahren zur Herstellung eines Fahrzeugreifens, **dadurch gekennzeichnet, dass** es wenigstens folgende Verfahrensschritte enthält:
- Extrusion wenigstens einer unvulkanisierten Kautschukmischung und anschließendes Ablängen zur Formung wenigstens eines unvulkanisierten Reifenbauteils und
- Auftragen einer Schicht aus einer wässrigen Polymer-Emulsion, welche wenigstens ein Polymer enthält, auf das extrudierte unvulkanisierte Reifenbauteil nach der Extrusion zur Bildung eines beschichteten unvulkanisierten Reifenbauteils, und
- Entfernung des Wasseranteils der wässrigen Polymer-Emulsion durch Verdampfen von dem beschichteten Reifenbauteil und
- Aufbringen des beschichteten Reifenbauteils auf eine unvulkanisierte Karkasse zur Herstellung eines unvulkanisierten Reifenrohlings und
- Vulkanisation des Reifenrohlings,
wobei die aufgetragene wässrige Emulsion Vulkanisationsagenzien enthält.

2. Verfahren zur Herstellung eines Fahrzeugreifens, **dadurch gekennzeichnet, dass** es wenigstens folgende Verfahrensschritte enthält:
a) Extrusion wenigstens einer unvulkanisierten Kautschukmischung
b) Auftragen einer Schicht aus einer wässrigen Polymer-Emulsion, welche wenigstens ein Polymer enthält, auf wenigstens eine Oberfläche der unvulkanisierten Kautschukmischung
c) Entfernung des Wasseranteils der wässrigen Polymer-Emulsion durch Verdampfen
d) Ablängen der extrudierten unvulkanisierten Kautschukmischung zur Formung eines unvulkanisierten Reifenbauteils
e) Aufbringen des unvulkanisierten Reifenbauteils auf eine unvulkanisierte Karkasse zur Herstellung eines unvulkanisierten Reifenrohlings und
f) Vulkanisation des Reifenrohlings,
wobei die aufgetragene wässrige Emulsion Vulkanisationsagenzien enthält.

3. Verfahren nach Anspruch 2, **dadurch gekennzeichnet, dass** der Verfahrensschritt d) zeitlich nach dem Verfahrensschritt b) erfolgt.

4. Verfahren nach Anspruch 2, **dadurch gekennzeichnet, dass** der Verfahrensschritt b) zeitlich nach dem Verfahrensschritt d) erfolgt.

5. Verfahren nach Anspruch 2, **dadurch gekennzeichnet, dass** der Verfahrensschritt b) zeitlich nach dem Verfahrensschritt e) erfolgt.

6. Verfahren nach einem der vorherigen Ansprüche, **dadurch gekennzeichnet, dass** die Dicke der Schicht aus einer wässrigen Polymer-Emulsion senkrecht zur Extrusionsrichtung vor dem Verdampfen des Wassers 10 bis 100 µm beträgt.

7. Verfahren nach einem der vorherigen Ansprüche, **dadurch gekennzeichnet, dass** die Dicke der Polymer-Schicht senkrecht zur Extrusionsrichtung nach dem Verdampfen des Wassers 5 bis 50 µm beträgt.

8. Verfahren nach einem der vorherigen Ansprüche, **dadurch gekennzeichnet, dass** das in der wässrigen Polymer-Emulsion enthaltene Polymer ein Latex aus Polyisopren, bevorzugt natürliches Polyisopren (Natur-Kautschuk), und/oder ein Latex aus Styrol-Butadien-Copolymeren und/oder Nitril-Butadien-Copolymeren und/oder Acrylnitrilen und/oder einem Copolymer von Acrylnitril und anderen Monomeren, wie Butadien, und/oder Polyurethan und/oder Ethylen-Propylen-Copolymeren und/oder Ethylen-Propylen-Dien-Terpolymeren und/oder weiteren Ethylen-Propylen-Elastomeren und/oder Polychloropren, wie Chloropren-Kautschuk, und/oder ein Latex aus einem weiteren Copolymer, dem als Monomer wenigstens Butadien zu Grunde liegt.

9. Verfahren nach einem der vorherigen Ansprüche, **dadurch gekennzeichnet, dass** es sich bei dem Bauteil um einen unvulkanisierten Laufstreifen handelt.

10. Verfahren nach Anspruch 9, **dadurch gekennzeichnet, dass** die wässrige Emulsion nur auf die radial äußere später mit der Heizform und im Fahrbetrieb mit der Fahrbahn in Berührung kommende Seite des Laufstreifens aufgetragen wird.

11. Verfahren nach Anspruch 1 oder 2, **dadurch gekennzeichnet, dass** das Auftragen einer Schicht aus einer wässrigen Polymer-Emulsion auf das extrudierte unvulkanisierte Bauteil unmittelbar nach der Extrusion erfolgt, während das extrudierte Bauteil eine Temperatur von 40 bis 180 °C aufweist.

12. Verwendung wenigstens einer wässrigen Emulsion eines Latex aus Polyisopren, bevorzugt natürliches Polyisopren (Natur-Kautschuk), und/oder eines Latex aus Styrol-Butadien-Copolymeren und/oder Nitril-Butadien-Copolymeren und/oder Acrylnitrilen und/oder einem Copolymer von Acrylnitril und anderen Monomeren, wie Butadien, und/oder Polyurethan und/oder Ethylen-Propylen-Copolymeren und/oder Ethylen-Propylen-Dien-Terpolymeren und/oder weiteren Ethylen-Propylen-Elastomeren und/oder Polychloropren, wie Chloropren-Kautschuk, und/oder eines Latex aus einem weiteren Copolymer, dem als Monomer wenigstens Butadien zu Grunde liegt, zur Beschichtung von extrudierten Bauteilen von Fahrzeugreifen, um die Anhaftung der extrudierten Bauteile, insbesondere des Laufstreifens und/oder der Seitenwand, während der Herstellung von Fahrzeugreifen an die Heizform zu vermeiden, wobei die wässrige Emulsion Vulkanisationsagenzien enthält.

13. Fahrzeugreifen, **dadurch gekennzeichnet, dass** er durch ein Verfahren nach einem der Ansprüche 1 bis 11 hergestellt ist.

## Claims

1. Process for the production of a tyre, **characterized in that** it comprises at least the following steps:
- extrusion at least of one unvulcanized rubber mixture and then division into lengths for the formation of at least one unvulcanized tyre component and
- application, onto the extruded unvulcanized tyre component after the extrusion process, of a layer made of an aqueous polymer emulsion which comprises at least one polymer, in order to form a coated unvulcanized tyre component, and
- removal of the water content of the aqueous polymer emulsion by evaporation from the coated tyre component and
- application of the coated tyre component to an unvulcanized carcass for the production of an unvulcanized tyre blank and
- vulcanization of the tyre blank,
where the aqueous emulsion applied comprises vulcanizing agents.

2. Process for production of a tyre, **characterized in that** it comprises at least the following steps:
a) extrusion of at least one unvulcanized rubber mixture
b) application, to at least one surface of the unvulcanized rubber mixture, of a layer made of an aqueous polymer emulsion which comprises at least one polymer
c) removal of the water content of the aqueous polymer emulsion by evaporation
d) division of the extruded unvulcanized rubber mixture into lengths for the formation of an unvulcanized tyre component
e) application of the unvulcanized tyre component to an unvulcanized carcass for the production of an unvulcanized tyre blank and
f) vulcanization of the tyre blank,
where the aqueous emulsion applied comprises vulcanizing agents.

3. Process according to Claim 2, **characterized in that** step d) is chronologically subsequent to step b).

4. Process according to Claim 2, **characterized in that** step b) is chronologically subsequent to step d).

5. Process according to Claim 2, **characterized in that** step b) is chronologically subsequent to step e).

6. Process according to any of the preceding claims, **characterized in that** the thickness of the layer made of an aqueous polymer emulsion perpendicularly to the direction of extrusion before evaporation of the water is from 10 to 100 µm.

7. Process according to any of the preceding claims, **characterized in that** the thickness of the polymer layer perpendicular to the direction of extrusion after evaporation of the water is from 5 to 50 µm.

8. Process according to any of the preceding claims, **characterized in that** the polymer present in the aqueous polymer emulsion is a latex made of polyisoprene, preferably being natural polyisoprene (natural rubber), and/or a latex made of styrene-butadiene copolymers and/or of nitrile-butadiene copolymers and/or of acrylonitriles and/or of a copolymer of acrylonitrile and of other monomers, for example butadiene, and/or polyurethane and/or of ethylene-propylene copolymers and/or of ethylene-propylene-diene terpolymers and/or of other ethylene-propylene elastomers and/or polychloroprene, for example chloroprene rubber, and/or a latex made of another copolymer based on at least butadiene as monomer.

9. Process according to any of the preceding claims, **characterized in that** the component is an unvulcanized tread.

10. Process according to Claim 9, **characterized in that** the aqueous emulsion is applied only to the radially exterior tread side that subsequently comes into contact with the heating mould and with the trafficway during use.

11. Process according to Claim 1 or 2, **characterized in that** the application, to the extruded unvulcanized component immediately after the extrusion process, of a layer made of an aqueous polymer emulsion takes place while the temperature of the extruded component is from 40 to 180°C.

12. Use, for the coating of extruded components of tyres, of at least one aqueous emulsion of a latex made of polyisoprene, preferably being natural polyisoprene (natural rubber), and/or a latex made of styrene-butadiene copolymers and/or of nitrile-butadiene copolymers and/or of acrylonitriles and/or of a copolymer of acrylonitrile and of other monomers, for example butadiene, and/or polyurethane and/or of ethylene-propylene copolymers and/or of ethylene-propylene-diene terpolymers and/or of other ethylene-propylene elastomers and/or polychloroprene, for example chloroprene rubber, and/or a latex made of another copolymer based on at least butadiene as monomer, in order to avoid sticking of the extruded components, in particular of the tread and/or the side wall, to the heating mould during the production of tyres, where the aqueous emulsion comprises vulcanizing agents.

13. Tyre, **characterized in that** it has been produced by a process according to any of Claims 1 to 11.

## Revendications

1. Procédé de fabrication d'un pneu de véhicule, **caractérisé en ce qu'**il comprend au moins les étapes de procédé suivantes :
- l'extrusion d'au moins un mélange de caoutchouc non vulcanisé, puis le sectionnement pour la formation d'au moins un composant de pneu non vulcanisé, et
- l'application d'une couche d'une émulsion aqueuse de polymère, qui contient au moins un polymère, sur le composant de pneu non vulcanisé extrudé après l'extrusion pour la formation d'un composant de pneu non vulcanisé revêtu, et
- l'élimination de la proportion d'eau de l'émulsion aqueuse de polymère par évaporation à partir du composant de pneu revêtu, et
- l'application du composant de pneu revêtu sur une carcasse non vulcanisée pour la fabrication d'une ébauche de pneu non vulcanisée, et
- la vulcanisation de l'ébauche de pneu,
l'émulsion aqueuse appliquée contenant des agents de vulcanisation.

2. Procédé de fabrication d'un pneu de véhicule, **caractérisé en ce qu'**il comprend au moins les étapes de procédé suivantes :
a) l'extrusion d'au moins un mélange de caoutchouc non vulcanisé,
b) l'application d'une couche d'une émulsion aqueuse de polymère, qui contient au moins un polymère, sur au moins une surface du mélange de caoutchouc non vulcanisé,
c) l'élimination de la proportion d'eau de l'émulsion aqueuse de polymère par évaporation,
d) le sectionnement du mélange de caoutchouc non vulcanisé extrudé pour former un composant de pneu non vulcanisé,
e) l'application du composant de pneu non vulcanisé sur une carcasse non vulcanisée pour la fabrication d'une ébauche de pneu non vulcanisée et
f) la vulcanisation de l'ébauche de pneu,
l'émulsion aqueuse appliquée contenant des agents de vulcanisation.

3. Procédé selon la revendication 2, **caractérisé en ce que** l'étape de procédé d) a lieu temporellement après l'étape de procédé b).

4. Procédé selon la revendication 2, **caractérisé en ce que** l'étape de procédé b) a lieu temporellement après l'étape de procédé d).

5. Procédé selon la revendication 2, **caractérisé en ce que** l'étape de procédé b) a lieu temporellement après l'étape de procédé e).

6. Procédé selon l'une quelconque des revendications précédentes, **caractérisé en ce que** l'épaisseur de la couche d'une émulsion aqueuse de polymère perpendiculairement à la direction d'extrusion avant l'évaporation de l'eau est de 10 à 100 µm.

7. Procédé selon l'une quelconque des revendications précédentes, **caractérisé en ce que** l'épaisseur de la couche de polymère perpendiculairement à la direction d'extrusion après l'évaporation de l'eau est de 5 à 50 µm.

8. Procédé selon l'une quelconque des revendications précédentes, **caractérisé en ce que** le polymère contenu dans l'émulsion aqueuse de polymère est un latex de polyisoprène, de préférence le polyisoprène naturel (caoutchouc naturel), et/ou un latex de copolymères de styrène-butadiène et/ou de copolymères de nitrile-butadiène et/ou d'acrylonitriles et/ou d'un copolymère d'acrylonitrile et d'autres monomères, tels que le butadiène, et/ou de polyuréthane et/ou de copolymères d'éthylène-propylène et/ou de terpolymères d'éthylène-propylène-diène et/ou d'autres élastomères d'éthylène-propylène et/ou de polychloroprène, tel que le caoutchouc de chloroprène, et/ou un latex d'un autre copolymère, à base au moins de butadiène en tant que monomère.

9. Procédé selon l'une quelconque des revendications précédentes, **caractérisé en ce que** le composant est une bande de roulement non vulcanisée.

10. Procédé selon la revendication 9, **caractérisé en ce que** l'émulsion aqueuse n'est appliquée que sur le côté radialement extérieur de la bande de roulement ultérieurement en contact avec le moule chauffant et en conduite avec la route.

11. Procédé selon la revendication 1 ou 2, **caractérisé en ce que** l'application d'une couche d'une émulsion aqueuse de polymère sur le composant non vulcanisé extrudé a lieu directement après l'extrusion, pendant que le composant extrudé présente une température de 40 à 180 °C.

12. Utilisation d'au moins une émulsion aqueuse d'un latex de polyisoprène, de préférence de polyisoprène naturel (caoutchouc naturel), et/ou d'un latex de copolymères de styrène-butadiène et/ou de copolymères de nitrile-butadiène et/ou d'acrylonitriles et/ou d'un copolymère d'acrylonitrile et d'autres monomères, tels que le butadiène, et/ou de polyuréthane et/ou de copolymères d'éthylène-propylène et/ou de terpolymères d'éthylène-propylène-diène et/ou d'autres élastomères d'éthylène-propylène et/ou de polychloroprène, tel que le caoutchouc de chloroprène, et/ou d'un latex d'un autre copolymère, à base au moins de butadiène en tant que monomère, pour le revêtement de composants extrudés de pneus de véhicules, afin d'éviter l'adhésion des composants extrudés, notamment de la bande de roulement et/ou de la paroi latérale, au moule chauffant pendant la fabrication de pneus de véhicules, l'émulsion aqueuse contenant des agents de vulcanisation.

13. Pneu de véhicule, **caractérisé en ce qu'**il est fabriqué par un procédé selon l'une quelconque des revendications 1 à 11.
